# FASCICULE DE BREVET EUROPEEN

(11) **EP 1 904 408 B1**
(45) Date de publication et mention de la délivrance du brevet: **29.05.2013**
(21) Numéro de dépôt: 06779045.1
(22) Date de dépôt: 12.07.2006
(51) Int. Cl.: C03B 5/235

(54) **PROCEDE D'ELABORATION DU VERRE**
VERFAHREN ZUR GLASHERSTELLUNG
METHOD FOR GLASS PREPARATION

(30) Priorité: 13.07.2005 FR 0552202
(43) Date de publication de la demande: 02.04.2008
(73) Titulaire: SAINT-GOBAIN ISOVER, 92400 Courbevoie (FR); SAINT-GOBAIN GLASS FRANCE, 92400 Courbevoie (FR)
(72) Inventeur: LECONTE, Jean-Gérard, F-92400 Courbevoie (FR)
(74) Mandataire: Teyssedre, Laurent
(86) Numéro de dépôt international: PCT/FR2006/050709
(87) Numéro de publication internationale: WO 2007/007012

(56) Documents cités:
- WO-A-02/092521
- FR-A- 1 395 208
- FR-A- 2 325 612
- FR-A- 2 787 784
- US-A- 4 473 388
- PATENT ABSTRACTS OF JAPAN vol. 018, no. 288 (C-1207), 2 juin 1994 (1994-06-02) & JP 06 056434 A (NIPPON TAISANBIN KOGYO KK), 1 mars 1994 (1994-03-01)

## Description

La présente invention concerne un procédé d'élaboration du verre. Elle s'intéresse plus particulièrement à un procédé dans lequel au moins une flamme vient impacter le tapis de composition.

L'élaboration du verre nécessite des températures élevées, souvent de l'ordre de 1400°C à 1700°C selon le type de verre. De fortes quantités d'énergie sont ainsi nécessaires, non seulement pour la fusion des matières premières, mais également pour accélérer les réactions chimiques entre lesdites matières premières, notamment les réactions de dissolution de la silice (élément majoritaire de la plupart des verres industriels, et parmi ceux dont la température de fusion est la plus élevée). Une température élevée est également nécessaire pour éliminer toutes les inclusions gazeuses du bain de verre en fusion, cette étape étant appelée « affinage ».

Ces inclusions gazeuses ont plusieurs origines. Elles proviennent principalement de l'air emprisonné entre les grains des matières pulvérulentes et du dégazage dû à certaines réactions chimiques se produisant pendant l'étape de fusion du verre. Ainsi les matières premières carbonatées (comme par exemple le carbonate de sodium, le calcaire, la dolomie) dégagent-elles de grandes quantités de dioxyde de carbone sous forme gazeuse. Les inclusions gazeuses peuvent également être dues à des réactions de désolubilisation de certains gaz dans certaines conditions, ou à des réactions chimiques ou électrochimiques entre le verre fondu et certains matériaux présents dans les fours (céramiques réfractaires et/ou métaux). Les inclusions gazeuses se retrouvent emprisonnées dans la masse de verre fondu, dont elles peuvent s'échapper à une vitesse proportionnelle au carré de leur diamètre. Ainsi les petites bulles (parfois appelées « puces ») ne peuvent-elles s'échapper qu'à des vitesses extrêmement faibles. La vitesse de remontée des bulles peut en outre être freinée par la viscosité du verre et par des mouvements de convection pouvant entraîner les bulles vers la sole du four. La viscosité diminuant lorsque la température augmente, une température élevée est ainsi nécessaire pour obtenir un verre exempt d'inclusions gazeuses.

Dans les fours de production du verre, l'énergie est généralement apportée au verre par des brûleurs et/ou par des électrodes immergées dans le verre.

Dans la plupart des fours industriels, en particulier pour la production de verre plat, de bouteilles ou de fibres, des brûleurs sont disposés dans les piédroits ou dans le pignon amont des fours de manière à développer une flamme parallèle à la surface du bain de verre. On parle notamment de brûleurs « aériens », car la flamme ne vient pas impacter la surface du bain de verre. Cette flamme permet le chauffage du bain de verre par rayonnement, en partie direct, mais également indirect grâce à la présence d'une voûte disposée au-dessus des brûleurs, ladite voûte venant réfléchir le rayonnement thermique.

Selon une géométrie dite « à brûleurs transversaux », fréquemment employée dans les fours de fusion pour le verre plat, ces brûleurs aériens sont disposés sur les parois latérales ou piédroits, et les flammes se développent transversalement au sens de l'écoulement du verre fondu. L'enfournement des matières premières est alors généralement réalisé par le pignon amont du four.

Selon une autre géométrie, plus fréquemment employée dans le domaine du conditionnement (bouteilles, pots, flacons...) et dite « à boucle », une grande flamme se développe depuis le pignon amont du four, dans le sens de l'écoulement du verre fondu.

Deux grandes familles de brûleurs sont employées en fonction de la nature du comburant utilisé. Dans le cas où l'air est utilisé comme comburant, des techniques de récupération de la chaleur permettent de limiter les pertes énergétiques dues au chauffage d'une grande quantité d'azote non-réactif et donc inutile. Selon les techniques les plus courantes, une partie de la chaleur générée par la réaction de combustion est emmagasinée dans des récupérateurs ou régénérateurs formés d'empilements de matériaux réfractaires, cette chaleur étant ensuite réemployée pour préchauffer l'air servant à la combustion.

L'oxygène peut également être employé comme comburant, ce qui ne nécessite pas la construction de tels récupérateurs.

Lorsque les verres sont difficiles à fondre, ou lorsqu'une augmentation de la tirée est nécessaire, un « boosting » est couramment employé. Dans le cas des verres absorbant le rayonnement infrarouge par exemple, des électrodes peuvent être utilisées au niveau de la sole du four pour apporter un surplus d'énergie et ainsi accélérer la fusion. L'absorption du rayonnement infrarouge par le bain de verre empêche en effet ledit rayonnement de pénétrer les couches les plus proches de la sole.

D'autres techniques de fusion ou de « boosting » ont été décrites, qui consistent à générer une flamme d'un brûleur à oxygène au contact direct du bain de verre ou du tapis de composition. On appelle « tapis de composition » la zone où le bain de verre en fusion est recouvert par les matières premières pulvérulentes et non encore fondues. Cette zone est située près des enfourneuses servant à l'introduction dans le four des matières premières. Les matières premières pulvérulentes comprennent aussi le « calcin », c'est-à-dire du verre recyclé broyé.

La demande WO 82/04246 décrit ainsi un procédé dans lequel les flammes de brûleurs à oxygène viennent impacter le bain de verre, aux endroits où il n'est pas recouvert par les matières premières. La demande EP 546 238 décrit un procédé dans lequel la flamme générée par le brûleur à oxygène entre en contact avec le verre fondu à l'interface entre le bain de verre découvert et le tapis de composition. Dans la demande EP 1 077 901 en revanche, c'est à la proximité immédiate du tapis de composition que se forme la flamme oxygène, laquelle est issue d'un brûleur situé en voûte et se forme perpendiculairement à la surface du bain de verre. La flamme oxygène, dont la température adiabatique est très élevée, permet ainsi de transférer de l'énergie au bain de verre ou au tapis de composition à la fois par rayonnement et par convection, augmentant ainsi la tirée, c'est-à-dire la quantité de verre produite par unité de temps.

Ces procédés ne sont toutefois pas dépourvus d'inconvénients, notamment en terme de qualité du verre.

Ce type de procédé ne peut pas être employé dans le cas des verres riches en éléments volatils tels que les oxydes alcalins (oxydes de sodium, de potassium ou de lithium) et/ou l'oxyde de bore, car des envols importants se produisent, qui se traduisent par une diminution importante de la teneur en lesdits éléments. Ces envols nuisent à la qualité du verre, à l'environnement (nécessitant alors l'acquisition de systèmes de dépollution particulièrement coûteux), ainsi qu'à la stabilité de la composition du verre et donc de ses propriétés physico-chimiques.

De même, dans les verres pauvres en oxydes alcalins, des problèmes d'affinage sont rencontrés, dus à des rebullages intempestifs.

Enfin, la position des brûleurs au niveau de la voûte pose des problèmes de fragilisation de cette dernière.

L'invention a pour but d'obvier à ces inconvénients en proposant un procédé permettant d'améliorer la fusion du verre tout en augmentant la tirée sans préjudice de la qualité d'affinage. Un autre but de l'invention est d'éviter la fragilisation de la voûte des fours.

L'invention a pour objet un procédé d'élaboration du verre selon la revendication 1.

Selon l'invention, de l'air est donc employé comme comburant. Par « air », il faut entendre de l'air non enrichi en oxygène, par conséquent comprenant environ 20% d'oxygène pour 80% d'azote.

Les inventeurs se sont aperçus que la flamme produite en utilisant l'air comme comburant permet de combiner un certain nombre d'avantages inattendus.

Il s'avère en effet qu'une telle flamme permet de limiter les envols d'éléments volatils, probablement du fait d'une température de flamme moins élevée. En outre, une amélioration de la qualité d'affinage est observée, en particulier pour des verres pauvres en alcalins. Ces verres sont en effet habituellement affinés à l'aide de sulfate de sodium, de l'oxyde de soufre SO₃ étant alors dissout dans le bain de verre. Les verres pauvres en oxydes alcalins présentent toutefois une faible solubilité en cet élément, ce qui génère des risques de rebullage intempestif. Un tel rebullage, néfaste à la qualité d'affinage, est en effet observé lorsqu'une flamme oxygène est employée, mais ne se produit pas dans le cas où l'on utilise une flamme dans laquelle l'air est utilisé comme comburant. Il semblerait que les fortes teneurs en eau typiques d'une atmosphère de fusion oxygène soient à l'origine de ce rebullage.

Le procédé selon l'invention permet également de diminuer les risques de fragilisation de la voûte. Cet avantage résulte également de la diminution des envols de matières volatiles et de la différence d'atmosphère de combustion.

Malgré la plus faible température adiabatique de flamme entre la flamme air et la flamme oxygène, il est en revanche étonnamment apparu que la modification de comburant ne s'accompagne d'aucune baisse significative de tirée.

Selon un mode de réalisation de l'invention, l'essentiel de l'énergie est apporté au bain de verre par la mise en oeuvre d'un tel procédé. L'invention met alors en oeuvre un four spécialement dédié à ce procédé, ne possédant pas par ailleurs de brûleurs aériens.

Un mode alternatif est toutefois préféré, dans lequel les injecteurs sont employés pour apporter un surplus d'énergie (« boosting ») dans un four comprenant au moins un brûleur aérien, de préférence dans un four comprenant au moins un brûleur arien dont le comburant est l'air et au moins un régénérateur ou un récupérateur de chaleur.

Le choix de la disposition des injecteurs en voûte dépend de la configuration du four, en particulier lorsque le procédé consiste à apporter un « boosting » à un four déjà existant.

Tous types d'associations d'injecteurs peuvent être envisagés dans le cadre de la présente invention.

L'injection d'air et de cumbustible gazeux ou liquide tel que le gaz naturel ou le fioul peut ainsi se faire par l'intermédiaire d'un brûleur comprenant au moins un conduit sensiblement cylindrique interne pour le combustible et un conduit externe et concentrique au conduit interne pour l'air. Lorsque le combustible est injecté par le biais d'un seul conduit interne, il n'est toutefois pas possible de régler indépendamment les débits et les vitesses des gaz. Il est donc préférable que le combustible, lorsqu'il est gazeux, soit injecté à deux pressions différentes par l'intermédiaire de deux conduits internes concentriques.

Des injecteurs séparés peuvent également être employés, le combustible et le comburant air étant injectés à partir d'endroits différents du four tels que la voûte, le pignon amont ou les parois latérales. Les deux injections ainsi séparées sont alors réglées de manière à ce que les deux jets, le jet d'air et le jet de combustible, se rencontrent à proximité immédiate du tapis de composition, donc de la zone où les matières premières pulvérulentes recouvrent le bain de verre, générant à cet endroit précis une flamme, siège de la combustion. L'air peut ainsi être injecté par le biais d'un injecteur situé dans la voûte du four, et le combustible injecté par un injecteur situé au niveau des parois latérales du four, ou inversement. Il est également possible qu'un injecteur d'air soit associé à plusieurs injecteurs de combustible, ou inversement.

Dans tous les cas, la flamme n'est générée qu'à proximité immédiate de la zone où lesdites matières premières pulvérulentes recouvrent le bain de verre (tapis de composition), ce qui permet d'éviter toute surchauffe de la voûte ou des parois du four, tout en maximisant le transfert thermique aux matières premières. La flamme est même avantageusement réglée de manière à ce qu'elle s'étale sur le tapis de composition en recouvrant la majeure partie dudit tapis de composition. Par proximité immédiate, il faut entendre que la flamme, dirigée depuis la partie haute du four vers le tapis de composition, se forme dans une zone située juste au-dessus du tapis de composition ; l'énergie générée par la flamme est ainsi transmise très efficacement aux matières premières, principalement par convection.

Il a été observé qu'un optimum du transfert thermique aux matières premières est réalisé lorsque l'impulsion spécifique de l'association d'injecteurs est comprise entre 2 et 4 N/MW, notamment entre 2,6 et 3,2 N/MW. L'impulsion spécifique est définie au sens de la présente invention comme la somme des impulsions (débit de quantité de mouvement) de l'air et du combustible rapportée à la puissance de l'association d'injecteurs. On obtient alors un transfert thermique optimal, se caractérisant par une flamme se formant uniquement à proximité immédiate du tapis de composition (juste au-dessus).

Les écoulements de combustible et d'air à la sortie des injecteurs ne sont généralement pas laminaires, au sens où le nombre de Reynolds (Re) est supérieur à 2000. Malgré cela, aucun mélange réactif des deux jets n'est observé, dans la mesure où l'impulsion spécifique est convenablement réglée.

Des entrées d'air supplémentaires peuvent être avantageusement créées de manière à mettre en oeuvre une combustion étagée.

Selon un mode de réalisation préféré du procédé selon l'invention et afin d'améliorer encore le transfert thermique aux matières premières, l'air utilisé comme comburant est préchauffé à une température d'au moins 500°C avant son entrée dans le four.

Le débit de combustible est de préférence compris entre 50 et 300 Nm³.h⁻¹, la puissance de chaque association d'injecteurs étant alors comprise entre 0,5 et 3 MW.

Le combustible gazeux ou liquide et l'air peuvent être introduits en proportions stoechiométriques. Il peut néanmoins être préféré dans certains cas d'autres conditions, telles que des conditions sous-stoechiométriques, donc réductrices (insuffisance d'air). C'est par exemple le cas lorsque des verres présentant un rédox élevé (supérieur à 0,3, voire à 0,5) sont souhaités, le rédox étant défini par la quantité de fer présent dans le verre sous la forme réduite (fer ferreux) rapportée à la quantité totale de fer.

Comme indiqué *supra,* le procédé selon l'invention présente un maximum d'avantages pour l'élaboration de verres contenant des matières volatiles telles que les oxydes alcalins ou l'oxyde de bore. Le procédé selon l'invention est donc de préférence employé pour l'élaboration de verres dont la composition chimique comprend plus de 3%, voire 4% en masse d'oxyde de bore et/ou plus de 12%, voire 15% d'oxydes alcalins.

Le procédé selon l'invention est ainsi avantageusement destiné à élaborer des verres pour fibres d'isolation thermique et phonique, dont la composition comprend les constituants suivants dans les limites définies ci-après exprimées en pourcentages pondéraux :

| | |
|---|---|
| SiO₂ | 45 à 75 |
| Al₂O₃ | 0 à 10 |
| CaO | 0 à 15 |
| MgO | 0 à 15 |
| Na₂O | 12 à 20 |
| K₂O | 0 à 10 |
| B₂O₃ | 3 à 10 |
| Fe₂O₃ | 0 à 5 |
| P₂O₅ | 0 à 3. |

Le procédé selon l'invention est également spécialement adapté à l'élaboration de verres pauvres en oxydes alcalins, en particulier pour des verres contenant moins de 2% en masse d'oxydes alcalins, voire moins de 1% ou 0,5%.

Parmi ces verres, figurent des verres utilisables comme substrats d'écrans LCD (Liquid Crystal Display), verres dont la composition comprend les constituants suivants dans les limites définies ci-après exprimées en pourcentages pondéraux :

| | |
|---|---|
| SiO₂ | 58-76% |
| B₂O₃ | 3-18%, notamment 5-16% |
| Al₂O₃ | 4-22% |
| MgO | 0-8% |
| CaO | 1-12% |
| SrO | 0-5% |

| | |
|---|---|
| BaO | 0-3% |

Ces verres cumulent en effet la présence d'oxyde de bore et la faible teneur en oxydes alcalins, ce qui rend le procédé selon l'invention particulièrement adapté à leur élaboration.

L'invention sera mieux comprise à la lecture des exemples de réalisation et des figures suivants, illustrant l'invention sans pour autant la limiter.
La Figure 1 représente de manière schématique une coupe longitudinale d'un four servant à la mise en oeuvre du procédé selon l'invention.
La Figure 2 représente une courbe obtenue expérimentalement et décrivant la variation observée entre la puissance transmise aux matières premières et l'impulsion spécifique.
La Figure 3 représente une photographie réalisée lors d'essais de brûleurs.

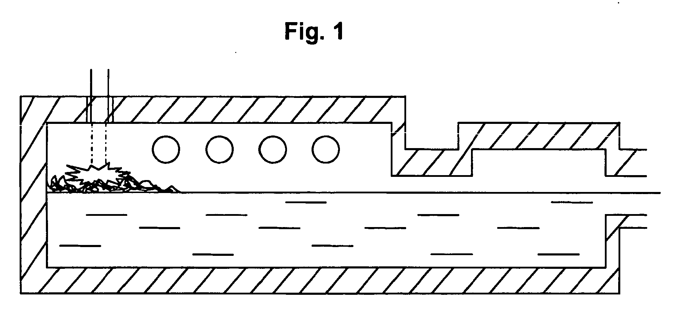

La Figure 1 illustre un mode de réalisation selon lequel un brûleur est placé en voûte.

Le four, construit en matériaux réfractaires, comprend une sole 1, un pignon amont 2 et une voûte 3. Des brûleurs aériens 4 sont disposés selon une configuration dite « en brûleurs transversaux », donc sur les parois latérales 5 ou piédroits. De manière schématique, quatre brûleurs aériens 4 fonctionnant à l'air ont été représentés, quatre autres brûleurs (non représentés) étant situés en vis-à-vis sur l'autre paroi latérale. En règle générale, les fours industriels de ce type comprennent 6 à 8 paires de brûleurs aériens. En régime de fonctionnement normal, seuls les brûleurs d'une même paroi fonctionnent simultanément, les gaz de combustion émis venant réchauffer les empilements de réfractaires situés dans les régénérateurs de la paroi opposée. Après un cycle d'environ 20 minutes, ces brûleurs s'arrêtent de fonctionner et les brûleurs de ia paroi opposée sont mis en route, l'air servant de comburant étant préchauffé car ayant circulé dans les empilements de réfractaires des régénérateurs venant d'être réchauffés. Les flammes de ces brûleurs aériens 4 se développent parallèlement à la surface 7 du bain de verre 6.

Des matières premières pulvérulentes sont introduites par une enfourneuse (non représentée) et forment un tapis de composition 8 sur la surface du bain de verre 6.

En Figure 1, est représenté une association d'injecteurs sous la forme d'un brûleur 9 situé en voûte. Ce brûleur 9 comprend deux cylindres concentriques, le cylindre interne étant destiné à l'injection du combustible, en l'occurrence du gaz naturel ou méthane (CH₄), le cylindre externe étant quant à lui destiné à l'injection de l'air.

Les deux flux s'écoulent de manière non laminaire dans une zone 10 sensiblement perpendiculaire à la surface 7 du bain de verre 6, puis réagissent au contact du tapis de composition 8 pour former une flamme 11, siège de la réaction de combustion entre l'air et le gaz naturel.

La flamme 11 permet d'accélérer le processus de fusion par différents phénomènes. La plus grande efficacité du transfert thermique vers le tapis de composition concourt bien évidemment à cet accroissement de la cinétique de fusion. L'impulsion de la flamme 11 modifie en outre les courants de convection dans le bain de verre 6 et force les matières premières pulvérulentes à pénétrer dans le bain de verre 6, ce qui accroît leur vitesse de fusion et de dissolution. En l'absence de brûleurs venant créer une combustion à proximité du tapis de composition, ce dernier surnagerait plus longtemps sans réagir et couvrirait en outre une zone plus importante du bain de verre 6, diminuant le transfert thermique des brûleurs aériens vers le bain de verre.

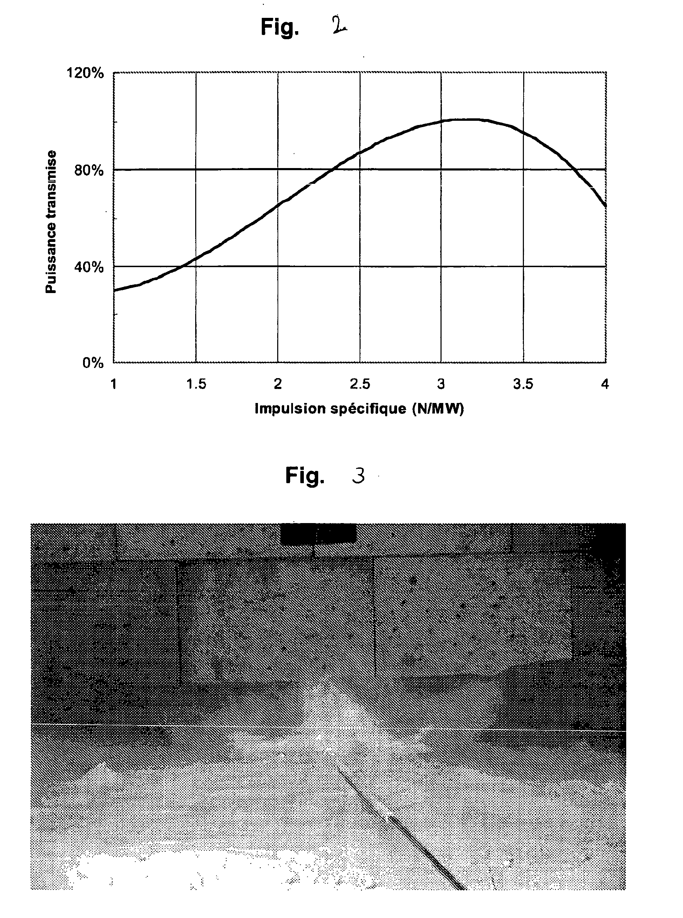

La Figure 2 représente une courbe décrivant la relation entre la puissance transmise aux matières premières et l'impulsion spécifique.

Cette relation a été observée suite à des essais réalisés sur des brûleurs placés en voûte d'un four. Lors de ces essais, l'impulsion spécifique du brûleur a été adaptée en modifiant les vitesses d'injection.

L'impulsion spécifique du brûleur a été représentée en abscisse, l'axe des ordonnées étant associé à la puissance transmise aux matières premières (en unités arbitraires, la puissance maximale étant associée à une valeur de 100%).

Cette courbe montre que la valeur d'impulsion spécifique d'environ 3N/MW est associée au maximum de puissance transmise au tapis de composition, par conséquent au cas où la flamme n'est générée qu'à proximité immédiate du tapis de composition.

La Figure 3 illustre précisément un cas où l'impulsion spécifique du brûleur est égale à 3N/MW. On peut distinguer sur la photographie le tapis de composition et le nez du brûleur situé en voûte. La flamme n'est générée qu'à proximité immédiate du tapis de composition et s'étale sur ledit tapis, transmettant par convection la majeure partie de sa puissance.

## Revendications

1. Procédé d'élaboration du verre à partir de matières premières pulvérulentes dans un four comprenant des parois latérales, une voûte, un pignon amont et au moins un injecteur d'air associé à au moins un injecteur de combustible gazeux ou liquide, au moins un desdits injecteurs étant disposé dans ladite voûte, ledit procédé comprenant les étapes d'injection d'air et de combustible gazeux ou liquide par lesdits injecteurs, ledit procédé étant **caractérisé en ce que** la ou chaque flamme ainsi générée n'est générée qu'à proximité immédiate de la zone où lesdites matières premières pulvérulentes recouvrent le bain de verre et **en ce que** l'impulsion spécifique de l'association d'injecteurs est comprise entre 2 et 4 N/MW.

2. Procédé selon la revendication 1, tel que le four comprend au moins un brûleur aérien dont le comburant est l'air et au moins un régénérateur ou récupérateur.

3. Procédé selon l'une des revendications précédentes, tel que l'injection d'air et de combustible gazeux ou liquide tel que le gaz naturel ou le fioul se fait par l'intermédiaire d'un brûleur comprenant au moins un conduit sensiblement cylindrique interne pour le combustible et un conduit externe et concentrique au conduit interne pour l'air.

4. Procédé selon la revendication précédente, tel que le combustible gazeux est injecté à deux pressions différentes par l'intermédiaire de deux conduits internes concentriques.

5. Procédé selon la revendication 1 ou 2, tel que le combustible et l'air sont injectés à partir d'endroits différents du four.

6. Procédé selon l'une des revendications précédentes, tel que l'impulsion spécifique de l'association d'injecteurs est comprise entre 2,6 et 3,2 N/MW.

7. Procédé selon l'une des revendications précédentes, tel que les écoulements de combustible et d'air à la sortie des injecteurs ne sont pas laminaires.

8. Procédé selon l'une des revendications précédentes, tel que l'air utilisé comme comburant est préchauffé à une température d'au moins 500°C avant son entrée dans le four.

9. Procédé selon l'une des revendications précédentes, tel que l'air est introduit dans des conditions sous-stoechiométriques par rapport au combustible afin d'élaborer un verre dont le rédox est supérieur à 0,3.

10. Procédé selon l'une des revendications précédentes, tel que la composition chimique du verre comprend plus de 3%, voire 4% en masse d'oxyde de bore et/ou plus de 12%, voire 15% d'oxydes alcalins.

11. Procédé selon l'une des revendications 1 à 9, tel que le verre élaboré contient moins de 2% en masse d'oxydes alcalins.

## Patentansprüche

1. Verfahren zur Glasherstellung ausgehend von pulverförmigen Rohstoffen in einem Ofen, der Seitenwände, ein Gewölbe, eine Rückwand und mindestens eine Luftdüse uinfasst, die mindestens einer Düse für gasförmigen oder flüssigen Brennstoff zugehörig ist, wobei mindestens eine der Düsen in dem Gewölbe angeordnet ist, wobei das Verfahren die Schritte der Einblasung/Einspritzung von Luft und gasförmigem oder flüssigem Brennstoff durch die Düsen umfasst, wobei das Verfahren **dadurch gekennzeichnet ist, dass** die oder jede so erzeugte Flamme lediglich in der unmittelbaren Nähe des Bereichs erzeugt wird, in dem die pulverförmigen Rohstoffe die Glasschmelze bedecken, und dadurch, dass der spezifische Impuls der Verbindung von Düsen zwischen 2 und 4 N/MW liegt.

2. Verfahren nach Anspruch 1, wobei der Ofen mindestens einen Luftbrenner, dessen Sauerstoffträger die Luft ist, und mindestens einen Regenerator oder Rekuperator umfasst.

3. Verfahren nach einem der vorhergehenden Ansprüche, **dadurch gekennzeichnet, dass** das Einblasen/Einspritzen von Luft und gasförmigem oder flüssigem Brennstoff, wie beispielsweise Erdgas oder Heizöl, über einen Brenner erfolgt, der mindestens ein im Wesentlichen zylindrisches inneres Leitungsrohr für den Brennstoff und ein äußeres Leitungsrohr für die Luft umfasst, das konzentrisch zum inneren Leitungsrohr ist.

4. Verfahren nach dem vorhergehenden Anspruch, **dadurch gekennzeichnet, dass** der gasförmige Brennstoff bei zwei unterschiedlichen Drücken über zwei konzentrische innere Leitungsrohre eingeblasen wird.

5. Verfahren nach Anspruch 1 oder 2, **dadurch gekennzeichnet, dass** der Brennstoff und die Luft ausgehend von unterschiedlichen Orten des Ofens eingespritzt oder eingeblasen werden.

6. Verfahren nach einem der vorhergehenden Ansprüche, **dadurch gekennzeichnet, dass** der spezifische Impuls der Verbindung von Düsen zwischen 2,6 und 3,2 N/MW liegt.

7. Verfahren nach einem der vorhergehenden Ansprüche, **dadurch gekennzeichnet, dass** die Strömungen von Brennstoff und Luft am Ausgang der Düsen nicht laminar sind.

8. Verfahren nach einem der vorhergehenden Ansprüche, **dadurch gekennzeichnet, dass** die als Sauerstoffträger verwendete Luft vor ihrem Eintritt in den Ofen auf eine Temperatur von mindestens 500 °C vorgeheizt wird.

9. Verfahren nach einem der vorhergehenden Ansprüche, **dadurch gekennzeichnet, dass** die Luft in unterstöchiometrischen Bedingungen in Bezug zum Brennstoff eingeführt wird, um ein Glas herzustellen, dessen Redox-Verhältnis höher als 0,3 ist.

10. Verfahren nach einem der vorhergehenden Ansprüche, **dadurch gekennzeichnet, dass** die chemische Zusammensetzung des Glases über 3 oder sogar 4 Massenprozent an Boroxid und/oder über 12% oder sogar 15% Alkalioxide umfasst.

11. Verfahren nach einem der Ansprüche 1 bis 9, **dadurch gekennzeichnet, dass** das hergestellte Glas weniger als 2 Massenprozent Alkalioxide enthält.

## Claims

1. A process for preparing glass from pulverulent batch materials in a furnace comprising sidewalls, a crown, an end wall and at least one air injector combined with at least one gaseous or liquid fuel injector, at least one of said injectors being placed in said crown, said process comprising the steps of injecting air and gaseous or liquid fuel through said injectors, said process being **characterized in that** the or each flame thus generated is only generated in the immediate vicinity of the zone where said pulverulent batch materials cover the glass bath, and **in that** the specific impulse of the combination of injectors is between 2 and 4 N/MW.

2. The process as claimed in claim 1, **characterized in that** the furnace comprises at least one overhead burner, of which the oxidizer is air and at least one regenerator or recuperator.

3. The process as claimed in one of the preceding claims, **characterized in that** the injection of air and of gaseous or liquid fuel such as natural gas or fuel oil is carried out via a burner comprising at least one approximately cylindrical inner duct for the fuel and an outer duct for the air that is concentric to the inner duct.

4. The process as claimed in the preceding claim, **characterized in that** the gaseous fuel is injected at two different pressures via two concentric inner ducts.

5. The process as claimed in claim 1 or 2, **characterized in that** the fuel and the air are injected from different places in the furnace.

6. The process as claimed in one of the preceding claims, **characterized in that** the specific impulse of the combination of injectors is between 2.6 and 3.2 N/MW.

7. The process as claimed in one of the preceding claims, **characterized in that** the fuel and air flows exiting the injectors are not laminar.

8. The process as claimed in one of the preceding claims, **characterized in that** the air used as an oxidizer is preheated to a temperature of at least 500°C before entering the furnace.

9. The process as claimed in one of the preceding claims, **characterized in that** the air is introduced under substoichiometric conditions relative to the fuel in order to produce a glass whose redox is greater than 0.3.

10. The process as claimed in one of the preceding claims, **characterized in that** the chemical composition of the glass comprises more than 3%, even 4%, by weight of boron oxide and/or more than 12%, even 15%, of alkali metal oxides.

11. The process as claimed in one of claims 1 to 9, **characterized in that** the glass produced contains less than 2% by weight of alkali metal oxides.
